# EUROPEAN PATENT APPLICATION

(11) **EP 4 659 884 A1**
(43) Date of publication of application: **10.12.2025**
(21) Application number: 25180507.3
(22) Date of filing: 03.06.2025
(51) Int. Cl.: B23B 31/20, B23B 31/12, B23B 31/26

(54) **SELF-CENTRING CLAMPING UNIT**

(30) Priority: 05.06.2024 IT 202400012907
(71) Applicant: Unilock S.r.l., 20090 Trezzano sul Naviglio (MI) (IT)
(72) Inventor: Crosti, Umberto, 20090 Trezzano sul Naviglio MI (IT); Tanzi, Andrea, 20090 Trezzano sul Naviglio MI (IT); Crosti, Chiara, 20090 Trezzano sul Naviglio MI (IT); Grassi, Valerio, 20090 Trezzano sul Naviglio MI (IT)
(74) Representative: Perani & Partners S.p.A.

(57) **Abstract**

The present invention relates to a self-centring clamping unit (1) for a machine tool (100), configured to clamp a workpiece (P) around a clamping axis (A-A), comprising:
- a collet-holder base (2) configured to be mounted on the machine tool (100);
- a collet (3), removably mountable on the collet-holder base (2), comprising a plurality of clamping elements (30) arranged around the clamping axis (A-A);
- actuation members (4) configured to act on the collet (3) so as to move the clamping elements (30) away from/towards the clamping axis (A-A) to engage/disengage the workpiece (P);
- a self-centring ring nut (5) couplable to the collet-holder base (2) for mounting the collet (3) on the collet-holder base (2) so that the actuation members (4) can act on the collet (3),
wherein:
- the collet-holder base (2) and the self-centring ring nut (5) have respectively a first and a second coupling portion (6, 7) that can be mutually coupled, for example in a threaded manner, so as to fix the self-centring ring nut (5) to the collet-holder base (2) along an axial direction (X-X) parallel to the clamping axis (A-A)
- the first and second coupling portion (6) have a first and second ground surfaces (61), respectively, configured to abut against each other to ensure the correct mutual positioning of the self-centring nut (5) and the collet-holder base (2) when coupled.

## Description

### Technical Field

The present invention relates to a self-centring clamping unit that finds useful application in the field of machine tool equipment, in accordance with the preamble of Claim 1.

In detail, the self-centring clamping unit that is the object of the present invention can be installed in machine tools for mechanical machining - such as, for example, lathes and machining centres-to tighten and, if required, rotate a workpiece.

### State of the art

In the filed of mechanical machining for chip removal, there has always been a need to increase the production capacity of machine tools without affecting their precision and machining quality.

The classic self-centring chucks comprise a base that can be mounted on the machine tool and a plurality of external clamping jaws that are radially slidable with respect to a clamping axis of the chuck.

In use, the jaws are jointly moved towards/away from the clamping axis to engage the workpiece externally or internally as appropriate.

It should be noted that, especially in recovery machining, to ensure high quality and machining precision it is essential to tighten the workpiece so that its axis is as much as possible centred on the clamping axis of the self-centring chuck which, in machining with rotating workpiece, matches with its axis of rotation.

Disadvantageously, due to the intensive and sometimes even incorrect use of self-centring chuck, the jaws wear out and tend to lose their alignment with time. Therefore, in order to meet the strictest tolerances, before and during each machining, it is necessary to turn the gripping portions of the jaws so as to guarantee the concentricity of the workpiece with the clamping axis of the chuck.

These turning operations are particularly difficult because, in addition to gradually consuming the jaws that must therefore be periodically replaced, they significantly increase the set-up times (in the order of hours) that precede each machining.

It should also be noted that the bases of the self-centring chucks are bulky and heavy, which not only complicates and slows down the installation operations of the self-centring chucks themselves on the machine tools, but also significantly limits the maximum cutting speed that can be achieved. The self-centring bases have in fact a high moment of inertia deriving from their significant mass (typically greater than 50kg) which, as is known, limits the maximum angular speed at which the motors of the machine tools are able to rotate them.

It is therefore apparent that the conventional self-centring chucks, due to the long set-up times and limited cutting speeds, do not allow machine tools to reach high production capacities and reduced cycle times.

It should also be noted that the conventional self-centring jaw chucks do not allow to satisfy tolerances below five hundredths of a millimetre.

In order to meet stricter machining tolerances than those achievable by conventional self-centring chucks, collet chucks have been developed, i.e., clamping units provided with a chuck having a collet-holder in which a collet provided with a plurality of clamping elements is smoothly housed. The sliding of the collet inside the collet-holder causes the clamping elements to move closer to/away from each other at the clamping axis, thus switching the clamping system between a closing configuration, in which it clamps the workpiece, and an opening configuration, in which it allows the workpiece to be reloaded.

While known collet chucks are capable of exceeding the tolerances achievable through conventional self-centring chucks and, due to their reduced weight, allow for an increase in maximum cutting speed to the benefit of cycle time, they are not without drawbacks.

In fact, the known collet chucks do not allow the easy and rapid replacement of the collet. The latter is in fact mounted on the collet-holder by means of a special ring nut fixed to the same collet-holder with a plurality of bolts that, at each replacement of the collet, must be individually unsecured and tightened by the operator.

### Object of the invention

In this context, the technical task underlying the present invention is to propose a self-centring clamping unit for a machine tool that overcomes the drawbacks of the known technique mentioned above.

In particular, an object of the present invention is to provide a self-centring clamping unit for a machine tool capable of allowing easy and rapid collet changes so as to minimize machine downtime and maximize the production capacity of the machine tool on which it is installed.

It is also an object of the present invention to provide a self-centring clamping unit for a machine tool that allows to achieve higher cutting speeds and to satisfy stricter machining tolerances than those obtainable by means of the conventional self-centring jaw chucks.

It is also an object of the present invention to provide a self-centring clamping unit devoid of locking clamps/jaws which, in accordance with the above, entail countless disadvantages.

### SUMMARY OF THE INVENTION

In accordance with the present invention, the indicated technical task and the specified objects are achieved by a self-centring clamping unit for a machine tool in accordance with one or more of the claims below.

In particular, the present invention proposes to provide a self-centring clamping unit, configured to clamp a workpiece around a clamping axis, wherein the collet-holder base and the ring nut respectively comprise a first and a second coupling portion that are mutually couplable/decouplable, preferably screwable/unscrewable, by rotating the collet with respect to the collet-holder base around the clamping axis.

It should be noted that the self-centring clamping unit that is the object of the present invention allows to perform the operations of disassembly/assembly of the collet from/on the collet-holder base with a simple and rapid rotation of the clamping ring. It is therefore apparent that, compared to conventional collet chucks, the self-centring clamping unit that is the object of the present invention makes it possible to reduce the machine downtime between one machining and the next, facilitating and speeding up the collet replacement operations. In other words, the self-centring clamping unit that is the object of the present invention is able to increase the production capacity of the machine tool on which it is installed by reducing the set-up times that precede the machining.

It should also be noted that the self-centring clamping unit that is the object of the present invention, being of the collet type (i.e. devoid of jaws/clamps present instead in conventional self-centring chucks), allows to obtain machining precisions and cutting speeds comparable to those of conventional self-centring collet chucks, which are known to be superior to those of conventional self-centring jaw platforms.

The present invention also makes it possible to provide a self-centring clamping unit lacking the disadvantageous jaws/clamps found in conventional self-centring chucks.

### LIST OF FIGURES

Additional features and advantages of the present invention will appear clearer from the indicative, and therefore not limiting, description of a preferred but not exclusive embodiment of a self-centring clamping unit, as illustrated in the accompanying drawings wherein:
- Figure 1 shows an exploded perspective view of a first embodiment of a self-centring clamping unit according to the present invention;

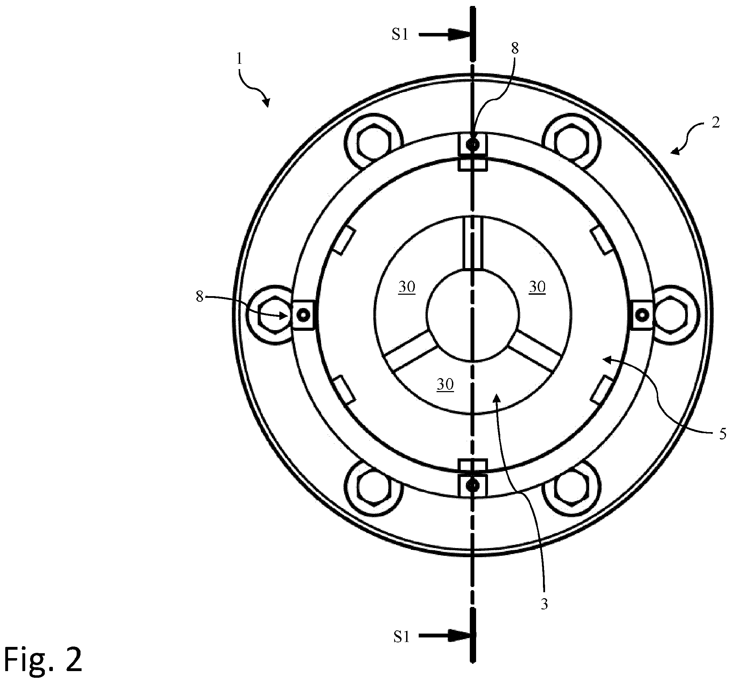

- Figure 2 shows a front view of the first embodiment of the self-centring clamping unit in Figure 1;
- Figure 3a shows a sectional view from the side of the first embodiment of the self-centring clamping unit in Figure 2 performed along the S1-S1 section line;
- Figure 3b shows an enlargement of a detail of Figure 3a,
- Figure 4 shows an exploded perspective view of a second embodiment of a self-centring clamping unit according to the present invention;
- Figure 5 shows a front view of the second embodiment of the self-centring clamping unit in Figure 4;
- Figure 6a shows a sectional view from the side of the second embodiment of the self-centring clamping unit in Figure 5 performed along the S2-S2 section line;
- Figure 6b shows an enlargement of a detail of Figure 6a,
- Figure 7a shows a sectional side view of the first embodiment of the self-centring clamping unit of Figure 1, installed on board a machine tool and while gripping a workpiece;
- Figure 7b shows a sectional side view of the second embodiment of the self-centring clamping unit of Figure 4, installed on board a machine tool and while gripping a workpiece.

### DETAILED DESCRIPTION

The object of the present description is a self-centring clamping unit 1 for a machine tool 100, in particular for a machine tool configured to perform machining operations for chip removal such as, for example, lathes (single/multi-chuck), mills, and machining centres.

In detail, the self-centring clamping unit 1 is configured to clamp a workpiece P around a clamping axis A-A so that, during the machining process, work tools (not shown) of the machine tool 100 can act on the workpiece P to perform a predetermined mechanical machining.

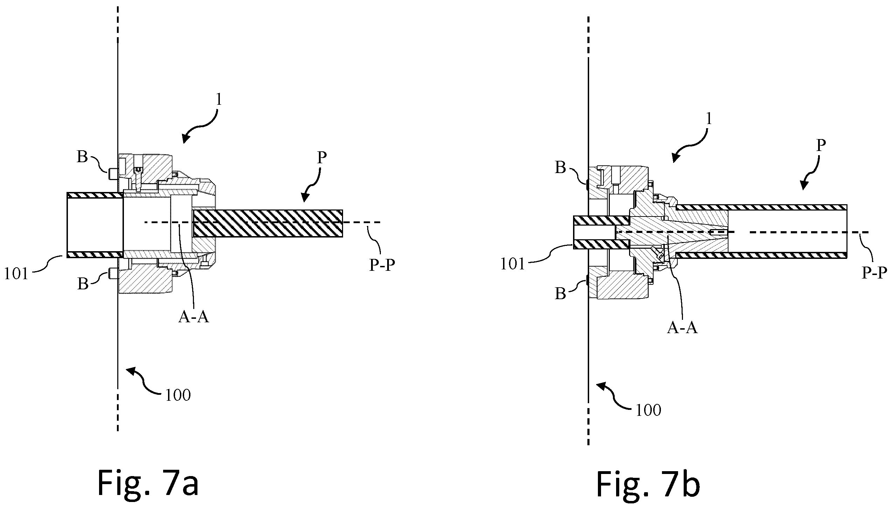

It should be specified that in the context of the present invention, the term "self-centring" is intended to indicate that the self-centring clamping unit 1, when used to clamp the workpiece P, is configured to match the clamping axis A-A with the axis P-P of the workpiece P (figures 7a and 7b).

The self-centring clamping unit 1 can be used to clamp the workpiece P both from the outside (figure 7a) and from the inside (figure 7b). Therefore, the self-centring clamping unit 1 can be used both to machine full workpieces that need to be gripped externally (e.g. full bars) and cable workpieces that can be gripped both externally and internally (e.g. hollow bars).

The self-centring clamping unit 1 that is the object of the present invention can be used both for machining operations that require rotating the workpiece P (e.g. turning) around the clamping axis A-A, and for machining operations in which the workpiece P is kept stationary (e.g. milling on machining centres).

Although for simplicity of exposition hereafter reference will always be made to the workpiece P, it should be noted that the self-centring clamping unit 1 object of the present invention is also employable for clamping (i.e., firmly holding during machining) a working tool of the machine tool 100 in place of the workpiece P without any modification.

The self-centring clamping unit 1 is switchable between a closing configuration, in which it engages (clamps) and holds the workpiece P so that machining can be performed; and an opening configuration, in which it disengages the workpiece P so that it can be reloaded (or tool changed if the self-centring clamping unit 1 is used to clamp a machining tool).

With reference to the embodiments shown in figures 7a and 7b, the self-centring clamping unit 1 comprises a special actuation element 101 configured to be functionally associated with the self-centring clamping unit 1 and switch it between the aforementioned closing and opening configurations. In particular, according to one aspect, the actuation element 101 is actuated by a special hydraulic system (not shown) of the machine tool 100 that moves it linearly from and towards the self-centring clamping unit 1 along a direction parallel to the clamping axis A-A. More details regarding the interaction between the actuation element 101 of the machine tool 100 and the self-centring clamping unit 1 are reported in a subsequent part of the description.

The self-centring clamping unit 1 includes a collet-holder base 2 configured to be mounted on machine tool 100.

According to one aspect, the machine tool 100 comprises a rotating table around the clamping axis A-A on which the collet-holder base 2 is mountable, for example, by means of a plurality of bolts B. It should be noted that by rotating the rotating table around the clamping axis A-A also the self-centring clamping unit 1 is consequently rotated around the same axis so as to be able to carry out mechanical machining that requires the workpiece P to be rotated (e.g. turning).

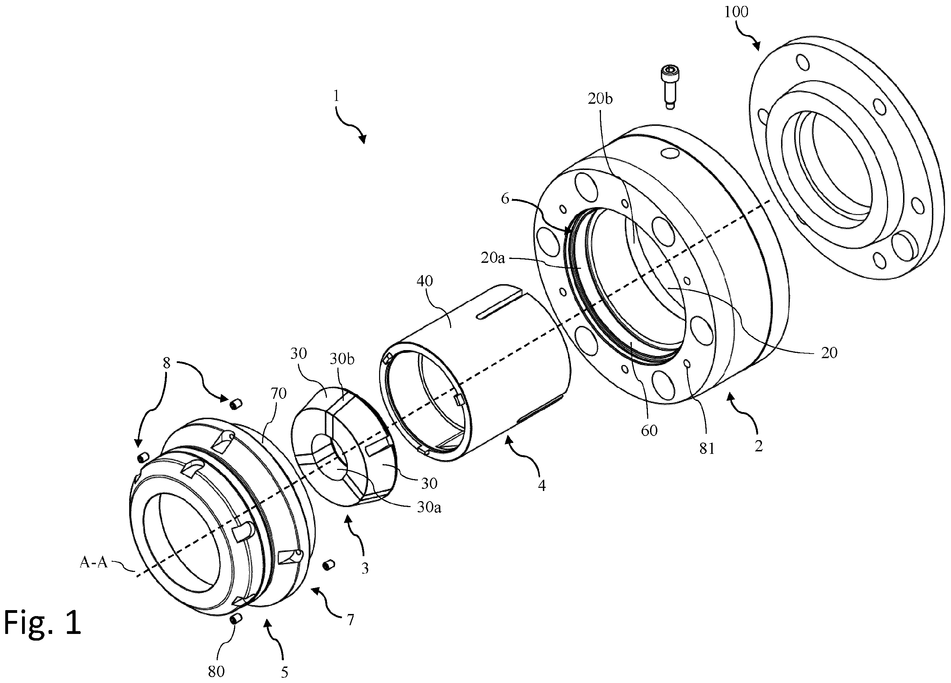

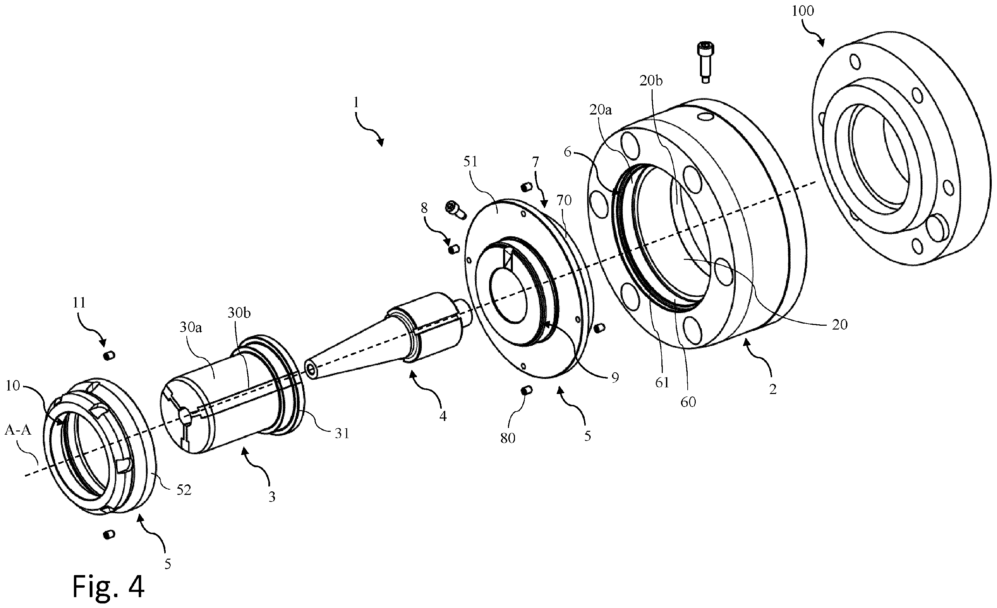

In the embodiments shown in Figures 1 and 4, the collet-holder base 2 has a cavity 20 which extends along an axial direction X-X directed parallel to the clamping axis A-A between an open front portion 20a at which a self-centring ring nut 5 is mountable, and a rear portion 20b adapted to receive at least part of the actuation element 101 of the machine tool 100. More details on the self-centring ring nut 5 and its mounting on the collet-holder base 2 will be provided in a subsequent part of the description.

The self-centring clamping unit 1 further comprises a collet 3, removably mountable on the collet-holder base 2, configured to clamp and retain the workpiece P.

It should be specified that the collet 3 is configured to clamp the workpiece P concentrically to the clamping axis A-A so that this matches with the axis P-P of the workpiece P.

It should also be specified that, advantageously, the collet 3 replaces the jaws/clamps present in conventional self-centring chucks which, in accordance with the above, involve countless disadvantages.

The collet 3 is configured to clamp the workpiece P when the self-centring clamping unit 1 is in the closing configuration, and disengage the workpiece P when the self-centring clamping unit 1 is in the opening configuration.

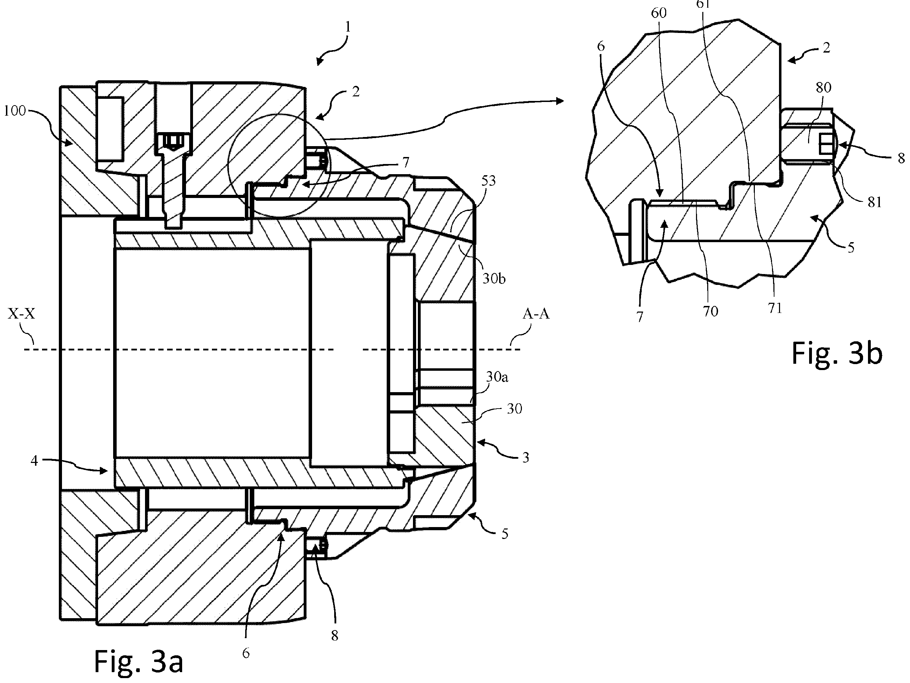

With reference to Figures 1 and 3, it is worth noting that on the same collet-holder base 2, collets 3 with different conformation/types are mountable so that different tightening can be performed. In this regard, it should be noted that the collet 3 shown in Figure 1 is configured to tighten the workpieces P from the outside (Figure 7a), while the collet shown in Figure 4 is configured to tighten workpieces P from the inside (Figure 7b).

The collet 3 comprises a plurality of clamping elements 30 arranged around the clamping axis A-A and mutually movable away from/towards the clamping axis A-A to engage/disengage the workpiece P.

In more detail, the clamping elements 30 are arranged around the clamping axis A-A along a circumferential direction C-C and, therefore, when they move away from/towards the clamping axis A-A they also move away from/towards each other along the circumferential direction C-C.

The clamping elements 30 moving away from/towards the clamping axis A-A, for example on command of the actuation element 101 of the machine tool 100, switch the self-centring clamping unit 1 between the closing configuration and the opening configuration.

According to one aspect, the clamping elements 30 define a cylindrical clamping surface 30a adapted to come into direct contact with the workpiece P and expandable/contractible upon movement of the clamping elements 30 from and towards the clamping axis A-A.

Preferably, the clamping elements 30 extend along the circumferential direction C-C sweeping a circumferential arc defining a respective section of the clamping surface 30a.

The collet 3 may also comprise a plurality of elastic elements 30b or slots (not shown in the figures) interposed between the clamping elements 30 along the circumferential direction C-C.

According to one embodiment, the self-centring clamping unit 1 object of the present invention is of the type commonly referred to as a "collet chuck", wherein the collet-holder base 2 and the collet 3 respectively form the chuck and the collet of such a collet chuck, and wherein the clamping axis A-A matches with the rotation axis of the chuck.

The self-centring clamping unit 1 also includes actuation members 4 configured to act on the collet 3 so as to move the clamping elements 30 away from/towards the clamping axis A-A when the collet 3 is mounted on the collet-holder base 2.

According to one aspect, the actuation members 4 are configured to form a kinematic connection between the actuation element 101 of the machine tool 100 and the clamping elements 30 of the collet 3. In other words, the actuation members 4 kinematically connect the actuation element 101 to the clamping elements 30 of the collet 3.

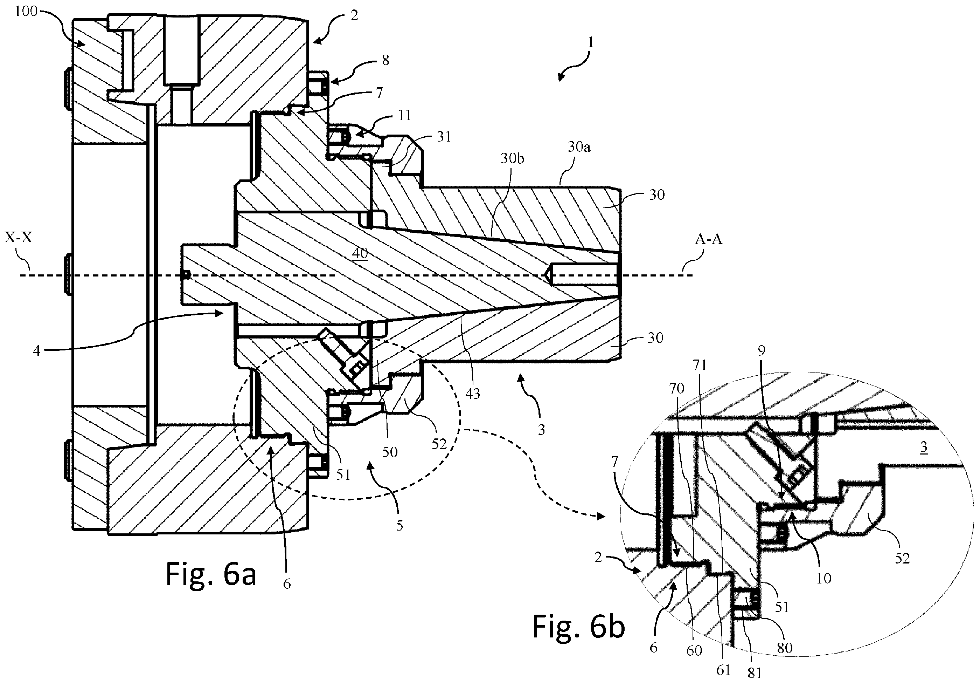

In the embodiment shown in Figures 3a and 6a, the actuation members 4 are at least partly slidably housed in the cavity 20 of the collet-holder base 2 along the axial direction X-X.

In particular, the actuation members 4 preferably comprise a pusher body 40 extending mainly along the axial direction X-X and interfacing from opposite parts with the collet 3 and, when the self-centring clamping unit 1 is mounted on the machine, with the actuation member 101.

The actuation element 101 of the machine tool 100 is for example configured to move the actuation members along the axial direction X-X to bring the clamping elements 30 of the collet 3 towards/away from the clamping axis A-A.

The self-centring clamping unit 1 also comprises a ring nut 5 that can be coupled to the collet-holder base 2 so as to mount the collet 3 on the latter so that the actuation members 4 can act on the collet 3 in accordance with the above.

This ring nut 5 is hereinafter referred to as self-centring ring nut 5 since, in use, it is configured to act on the clamping elements 30 so that the collet 3 clamps the workpiece P concentrically to the clamping axis A-A.

The self-centring ring nut 5, when coupled to the collet-holder base 2, therefore has the function of constraining the collet 3 along the axial direction X-X so as to retain it mounted on the collet-holder base 3.

In the embodiment shown in Figures 6a and 6b, the self-centring ring nut 5 is mounted on the front portion 20a of the cavity 20 of the collet-holder base 2.

When the self-centring ring nut 5 is coupled to the collet-holder base 2, the collet 3 is interposed between the actuation members 4 and the self-centring ring nut 5 itself.

It should be noted that the geometric conformation of the actuation members 4 and the self-centring ring nut 5 vary as a function of the conformation/type of collet 3, in particular if the collet 3 is configured to clamp the workpiece from the outside (figure 7a) or from the inside (figure 7b).

In the embodiment shown in Figures 1, 3a and 7a, the collet 3 is configured to externally clamp the workpiece P and has: a cylindrical inner surface defining the clamping surface 30a, and a conical outer surface 30b. In this embodiment, the self-centring ring nut 5 identifies a conical wall 53 configured to act on the conical outer surface 30b of the collet 3 so as to move the clamping elements 30 towards/away from the clamping axis A-A to the movement of the collet 3 along the axial direction X-X under the control of the actuation members 4.

In the embodiment shown in Figures 4, 6a and 7b, the collet 3 is configured to internally clamp the workpiece P and has: a cylindrical outer surface defining the clamping surface 30a, and a conical inner surface 30b. In this embodiment, the actuation members 4 identify a conical wall 43 configured to act on the conical inner surface 30b of the collet 3 so as to move the clamping elements 30 towards/away from the clamping axis A-A to the movement of the actuation members 4 along the axial direction X-X.

According to one aspect, in the embodiment in which the collet 3 is configured to internally clamp the workpiece P, the pusher body 40 identifies the conical wall 43 of the actuation members 4.

Preferably, the aforesaid outer and inner surfaces of the collet 3 and the aforesaid conical wall 43, 53 identified by the self-centring ring nut 5 or the actuation members 4, are all coaxial and have the clamping axis A-A as an axis.

It should be noted that, to allow the recurring operations of replacing the clamp 3, the self-centring ring nut 5 is removably coupled with the collet-holder base 2. To this end, the collet-holder base 2 and the self-centring ring nut 5 have respectively a first and a second coupling portion 6, 7 configured to couple/decouple each other by rotating the self-centring ring nut 5 with respect to the collet-holder base 2 around the clamping axis A-A.

When the second portion 7 is coupled to the first coupling portion 6, the self-centring ring nut 5 is fixed to the collet-holder base 2 along the axial direction X-X so as to mount the collet 3 on the collet-holder base 2 in accordance with the above.

It should be noted that in order to decouple the self-centring ring nut 5 from the collet-holder base 2 in order to release the collet 3 and allow its replacement in the self-centring clamping unit 1, object of the present invention, it is sufficient to rotate the self-centring ring nut 5 around the clamping axis A-A with respect to the collet-holder base 2. Subsequently, to couple the self-centring ring nut 5 on the collet-holder base 2 after replacing the clamp 3, it is sufficient to arrange the self-centring ring nut 5 on the collet-holder base 2 and rotate it around the clamping axis A-A with respect to the collet-holder base 2.

It is apparent that the operations indicated above to replace the collet 3 in the self-centring clamping unit 1, that is the object of the present invention, are faster and easier to execute than the multiple bolt clamping/unclamping operations required with the known collet chucks. Therefore, the self-centring clamping unit 1 that is the object of the present invention, makes it possible to facilitate and speed up the operations of replacing the clamp 3, thus reducing the duration of machine downtime to the benefit of the production capacity of the latter.

In the embodiments shown in the attached figures, the first and second coupling portions 6, 7 are configured to form a threaded-type coupling. That is to say that the first and second coupling portions 6, 7 have respective mutually couplable/decouplable threaded portions by means of a relative rotation between the self-centring ring nut 5 and the collet-holder base 2 around the clamping axis A-A.

In order to minimize the number of turns around the clamping axis A-A to couple/decouple the self-centring ring nut 5 to/from the collet-holder base 2, the threaded coupling provided by the first and second coupling portions 6, 7 is preferably of the multi-principle type - e.g. two-, three- or more-principle.

In alternative embodiments to those shown in the attached figures, the first and second coupling portions 6, 7 are configured to form a bayonet-type coupling. It should be specified that the bayonet connection has been well known to the person skilled in the art for some time and therefore will not be further described.

According to one aspect, the first coupling portion 6 of the collet-holder base 2 has a first coupling surface 60 extending around the clamping axis A-A, and the second coupling portion 7 of the self-centring ring nut 5 has a second coupling surface 70, which can be coupled to the first coupling surface 60, also extending around the clamping axis A-A when coupled to the first coupling surface 60 (i.e. when the self-centring ring nut 5 is coupled to the collet-holder base 2).

Preferably, the first and second coupling surfaces 60, 70 both have a cylindrical conformation so that, when coupled, they are coaxial and have the clamping axis A-A per axis.

In the embodiment shown in the attached figures, the first coupling surface 60 and the second coupling surface 70 are threaded so that they can be mutually engaged and disengaged by means of a mutual rotation around the clamping axis A-A. It should be specified that in this embodiment the engagement and disengagement of the first and second coupling surface 60, 70 take place by means of their relative rotations in opposite rotation directions (e.g. clockwise and counterclockwise) around the clamping axis A-A.

Otherwise, in the embodiment in which the first and second coupling portions 6, 7 make a bayonet coupling, one of the first and second coupling surfaces 60, 70 identifies at least one slider (not shown in the figures) and the other at least one guide (not shown in the figures) within which the slider is insertable and lockable along the axial direction X-X.

Although the bayonet-type connection is known to the person skilled in the art, it should be specified that the guide comprises at least one insertion/extraction section extending along the axial direction X-X and a locking section extending transversely to the axial direction X-X, in particular along the circumferential direction C-C. **In** use, when the slider is in the locking section the first and second coupling portions 6, 7 - and therefore the collet-holder base 2 and the self-centring ring nut 5 - are integral (i.e. mutually fixed) along the axial direction X-X.

According to one aspect, the first and second coupling portions 6, 7 also include a first and second ground surface 61, 71 respectively configured to abut one another to ensure the correct mutual positioning of the self-centring ring nut 5 and the collet-holder base 2 when coupled.

According to a further aspect, the first and second ground surfaces 61, 71 are arranged downstream respectively of the first and second coupling surfaces 60, 70 along the axial direction A-A. That is to say, the first and second ground surfaces 61, 71 are arranged so as to come into contact after the first and second coupling surfaces 60, 70 during the coupling operation of the ring nut 5 to the collet-holder base 2. **In** the embodiments shown in Figures 3a, 3b, 6a, and 6b, the first and second ground surfaces 61, 71 are cylindrical and fit over each other. In particular, preferably, the first ground surface 61 is coaxial with the first coupling surface 60 of the collet-holder base 2 and the second ground surface 71 is coaxial with the second coupling surface 70 of the self-centring ring nut 5. Advantageously, this allows to guarantee a high coaxiality of the self-centring ring nut 5 with the collet-holder base 2 and therefore a precise positioning of the collet 3 and in particular of the clamping axis A-A during machining, thus positively impacting on the quality and precision of machining.

According to one aspect, the first and second ground surfaces 61, 71 have a larger diameter than the first and second coupling surfaces 60, 70.

According to one embodiment, the self-centring clamping unit 1 comprises locking members 8 configured to block the angular position of the self-centring ring nut 3 with respect to the collet-holder base 2 around the clamping axis A-A. The locking members 8 therefore allow to prevent the unwanted decoupling of the self-centring ring nut 5 from the collet-holder base 2 during the mechanical machining process.

In the embodiments shown in figures 1 and 4, the locking members 8 comprise at least one locking element 80 configured to engage both the collet-holder base 2 and the self-centring ring nut 5 simultaneously to prevent their relative rotary motion about the clamping axis A-A.

The locking element 80 can for example be a grub screw insertable in a special threaded through hole 81 obtained on the self-centring ring nut 5 so that, when properly tightened, it grips on the collet-holder base 2 locking the rotation of the self-centring ring nut 5 with respect to the latter by friction. It should be specified that the threaded hole 81 extends parallel to the clamping axis A-A and is offset from the latter.

The locking element 80 can also be a pin configured to engage simultaneously in a first hole obtained on the collet-holder base 2 and a second hole obtained on the self-centring ring nut 5 when aligned. It should be specified that the first and second holes 81, 82 are offset from the clamping axis A-A by the same distance and extend parallel to the latter.

According to one aspect, the self-centring ring nut 5 is made of two pieces (hereinafter first and second body 51, 52) that are mutually couplable and decouplable.

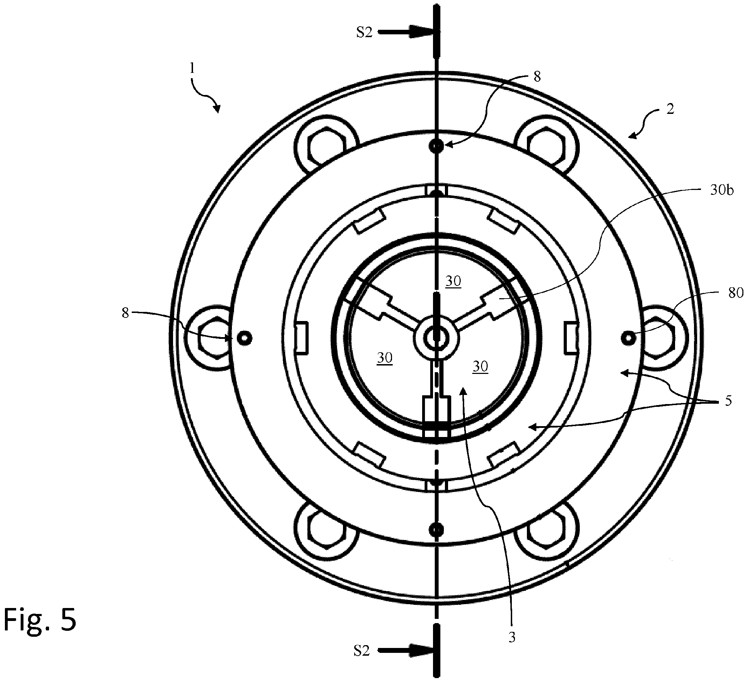

In the embodiment shown in figures 4, 5, 6a, 6b and 7b, the self-centring ring nut 5 comprises a first body 51 identifying the second coupling portion 7, couplable to the collet-holder base 2 in accordance with the above.

Still with reference to the embodiment shown in figures 4, 5, 6a, 6b and 7b, the self-centring ring nut 5 comprises a second body 52 reversibly couplable with the first body 51 so as to define with the latter a seat 50 adapted to receive and retain the collet 3 along the axial direction X-X. Therefore, when arranged in the seat 50, the collet 3 is at least partially interposed between the first and second bodies 51, 52 along the axial direction X-X.

According to one aspect, the collet 3 comprises a protrusion 31 extending radially to the clamping axis A-A and adapted to engage with the seat 50 so as to be interposed between the first and second bodies 51, 52 along the axial direction X-X.

With reference to the embodiment shown in figure 6a and in particular to the details shown in the enlargement of figure 6b, the first body 51 and the second body 52 have respectively a third coupling portion 9 and a fourth coupling portion 10 which are reversibly mutually coupled to fix the first body 51 to the second body 52 along the axial direction X-X.

Such third and fourth coupling portions 9, 10 are configured to form a coupling of the threaded or bayonet type. The third and fourth coupling portions 9, 10 are then configured to couple and decouple by relative rotation between the first and second bodies 51, 52, in particular around the clamping axis A-A.

It should be specified that the above for the coupling between the first and second coupling portions 7, 8 is to be understood as equally applicable to the third and fourth coupling portions 9, 10.

According to one embodiment, the self-centring clamping unit 1 comprises further locking members 11 configured to lock the angular position of the second body 52 with respect to the first body 51 around the clamping axis A-A. The further locking members 1 therefore allow to prevent the unwanted decoupling of the second body 52 from the first body 51 during the mechanical machining process.

The above for the locking members 8 is also applicable to the further locking members 11.

According to one aspect, the first and second coupling portions 6, 7 are configured to form a threaded coupling characterized by a first thread pitch P1, while the third and fourth coupling portions 9, 10 are configured to form a threaded coupling characterized by a second thread pitch P2 different from the first thread pitch P1.

Advantageously, the different thread pitches between the first and second coupling portions and between the third and fourth coupling portions allow to prevent their unwanted simultaneous loosening.

It is clear that a person skilled in the art will be able to make numerous equivalent modifications to the variants set forth above, without thereby departing from the scope of protection as defined by the appended claims.

## Claims

1. Self-centring clamping unit (1) for a machine tool (100), said self-centring clamping unit (1) being configured to clamp a workpiece (P) around a clamping axis (A-A) and comprising:
- a collet-holder base (2) configured to be mounted on the machine tool (100);
- a collet (3), removably mountable on the collet-holder base (2), comprising a plurality of clamping elements (30) arranged around the clamping axis (A-A) and mutually movable away from/towards the clamping axis (A-A) to engage/disengage the workpiece (P);
- actuation members (4) configured to act on the collet (3) so as to move the clamping elements (30) away from/towards the clamping axis (A-A) when said collet (3) is mounted on the collet-holder base (2);
- a self-centring ring nut (5) couplable to the collet-holder base (2) for mounting the collet (3) on the collet-holder base (2) so that the actuation members (4) can act on said collet (3),
wherein:
- the collet-holder base (2) has a first coupling portion (6);
- the self-centring ring nut (5) has a second coupling portion (7) configured to couple/decouple to/from the first coupling portion (6) upon the rotation of the self-centring ring nut (5) with respect to the collet-holder base (2) around the clamping axis (A-A); when coupled to the first coupling portion (6), the second coupling portion (7) fixes the self-centring ring nut (5) to the collet-holder base (2) along an axial direction (X-X) parallel to the clamping axis (A-A)
**characterized in that:**
- the first coupling portion (6) has a first ground surface (61);
- the second coupling portion (7) has a second ground surface (71) configured to abut against the first ground surface (61) to ensure the correct mutual positioning of the self-centring ring nut (5) and the collet-holder base (2) when coupled.

2. Self-centring clamping unit (1) according to claim 1, wherein the first coupling portion (6) and the second coupling portion (7) are configured to make a threaded or bayonet coupling.

3. Clamping unit (1) according to claim 1 or 2, wherein:
- the first coupling portion (6) has a first coupling surface (60) extending around the clamping axis (A-A);
- the second coupling portion (7) has a second coupling surface (70) couplable to the first coupling surface (60), the second coupling surface (70) extending around the clamping axis (A-A) when coupled to the first coupling surface (60).

4. Self-centring clamping unit (1) according to claim 3, wherein:
- the first coupling surface (60) and the second coupling surface (70) have a cylindrical shape,
- when coupled, the first coupling surface (60) and the second coupling surface (70) are coaxial and have the clamping axis (A-A) as axis.

5. Self-centring clamping unit (1) according to claim 3 or 4, wherein:
- the first ground surface (61) is cylindrical and coaxial with the first coupling surface (60);
- the second ground surface (72) is cylindrical and coaxial with the second coupling surface (70).

6. Self-centring clamping unit (1) according to any one of the preceding claims, comprising locking members (8) which, when the self-centring ring nut (5) is coupled to the collet-holder base (2), are configured to lock the angular position of the self-centring ring nut (5) with respect to the collet-holder base (2) around the clamping axis (A-A).

7. Self-centring clamping unit (1) according to any one of the preceding claims, wherein the self-centring ring nut (5) comprises:
- a first body (51), couplable to the collet-holder base (2), identifying the second coupling portion (7); and
- a second body (52) reversibly couplable with the first body (51), said second body (52) when coupled with the first body (51) defining a seat (50) adapted to receive and retain the collet (3) along an axial direction (X-X).

8. Self-centring clamping unit (1) according to claim 7, wherein:
- the first body (51) has a third coupling portion (9);
- the second body (52) has a fourth coupling portion (10) which can be reversibly coupled to the third coupling portion (9);
- the third coupling portion (9) and the fourth coupling portion (10) are configured to make a threaded or bayonet coupling.

9. Self-centring clamping unit (1) according to the combination of claim 8 with any one of claims 2 to 7, wherein:
- the first coupling portion (6) and the second coupling portion (7) are configured to make a threaded coupling **characterised by** a first thread pitch (P1);
- the third coupling portion (9) and the fourth coupling portion (10) are configured to make a threaded coupling **characterised by** a second thread pitch (P2) different from the first thread pitch (P1).

10. Self-centring clamping unit (1) according to any one of the preceding claims, wherein said clamping unit (1) is devoid of clamping jaws.
